**Europäisches Patentamt**

**European Patent Office**

**Office européen des brevets**

(19)

(11) Veröffentlichungsnummer: **0 496 211 A2**

# EUROPÄISCHE PATENTANMELDUNG

(12)

(21) Anmeldenummer: **92100238.2**

(22) Anmeldetag: **09.01.92**

(51) Int. Cl.⁵: **C08L 67/02**, C08L 25/12, C08L 51/04, //(C08L67/02,25:12, 51:04)

(30) Priorität: **22.01.91 DE 4101699**

(43) Veröffentlichungstag der Anmeldung: **29.07.92 Patentblatt 92/31**

(84) Benannte Vertragsstaaten: **BE CH DE ES FR GB IT LI NL SE**

(71) Anmelder: **BAYER AG**

**W-5090 Leverkusen 1 Bayerwerk(DE)**

(72) Erfinder: **Zander, Klaus, Dr.**
**Gustav-Nachtigal-Strasse 9**
**W-4300 Essen 11(DE)**
Erfinder: **Kirsch, Jürgen, Dr.**

**Völklinger Strasse 20**
**W-5090 Leverkusen(DE)**
Erfinder: **Gehrke, Hans-Georg, Dipl.-Ing.**
**Schlehdornweg 29**
**W-5068 Odenthal(DE)**
Erfinder: **Piejko, Karl-Erwin, Dr.**
**Unterscheider Weg 7a**
**W-5060 Bergisch Gladbach 2(DE)**
Erfinder: **Lindner, Christian, Dr.**
**Im Wasserblech 11**
**W-5000 Köln 91(DE)**
Erfinder: **Schulz-Schlitte, Wolfgang, Dr.**
**Wiedstrasse 2**
**W-4047 Dormagen(DE)**

(54) **Thermoplastische Polyesterformmassen.**

(57) a) 30 bis 80 Gew.-Teilen eines thermoplastischen Polyalkylenterephthalates auf Basis aromatischer Dicarbonsäuren oder ihrer reaktionsfähigen Derivate und aliphatischen, cycloaliphatischen oder araliphatischen Diolen,

b) 10 bis 50 Gew.-Teilen eines in Masse hergestellten Styrol-Acrylnitril-Copolymerharzes mit Acrylnitrilgehalten von 15 bis 30 Gew.-%, bezogen auf 100 Gew.-Teile (b), und L-Werten von 40 bis 100, wobei der L-Wert definiert ist als

$$\frac{\eta\ spez}{C}\ ,\ gemessen\ bei\ einer\ Konzentration$$

$$C = 5\ g/l\ in\ Methylethylketon\ bei\ 25^{0}C,\ und$$

c) 20 bis 50 Gew.-Teilen eines Emulsionspfropfpolymerisates aus Vinylmonomeren auf einem Kautschuk, wobei das Pfropfpolymerisat Kautschukgehalte von 30 bis 59 Gew.-% bezogen auf 100 Gew.-Teile (c) enthält, wobei sich die Gew.-Teile a) bis c) zu 100 ergänzen sollen.

EP 0 496 211 A2

Die Erfindung betrifft thermoplastische Polyesterformmassen mit guter Zähigkeit und verbessertem Modulverhalten.

Es ist bekannt, lineare gesättigte Polyester aromatischer Dicarbonsäuren zu kristallinen Formkörpern zu verarbeiten. Von technischer Bedeutung ist die Spritzgußverarbeitung von Polyethylenterephthalat und Polybutylenterephthalat. Hierbei zeigt Polybutylenterephthalat eine wesentlich größere Kristallisationsgeschwindigkeit als Polyethylenterephthalat, wodurch es sich besonders gut dazu eignet, Formkörper mit kurzen Zykluszeiten herzustellen. Die so hergestellten Formteile weisen neben den für viele Anwendungen wichtigen guten mechanischen Eigenschaften auch eine große Oberflächenhärte sowie guten Glanz aus. Für viele Anwendungsbereiche ist es wünschenswert schlagzähe Polyester zur Verfügung zu haben, die aber gleichzeitig über hohe Module verfügen, d.h. zwei Eigenschaften zu kombinieren, die normalerweise gegenläufig sind.

Es existieren zahlreiche Vorschläge, die Zähigkeit thermoplastischer Polyester durch Zumischen oder Einkondensieren anderer Polymerer, insbesondere solcher auf Basis modifizierter Elastomerer oder Polyolefine, anzuheben (DE-OS 1 694 173, 1 928 369, DE-AS 1 961 226, 1 962 855, DE-OS 2 248 242, 2 310 034, 2 357 406, 2 364 318, US-P 3 236 914, 3 723 574).

Bekannt ist auch nach EP-A 379 255, daß man Copolyester mit Styrol-Acrylnitril-Copolymeren kombinieren kann. Setzt man keine Copolyester ein, sondern z.B. Polybutylenterephthalat (also ein Homopolyester), so ist es aus Verträglichkeitsgründen erforderlich, spezielle Styrol-Methylmethacrylatcopolymere einzusetzen (EP-A 364 240). Man hat auch schon versucht SAN-Pfropfpolymerisate mit Homopolyestern zu kombinieren (EP-A 22 216, DE-OS 2 035 390, 2 348 377). Es zeigt sich allerdings, daß nur dann gute Zähigkeitseigenschaften erhalten werden, wenn die Pfropfpolymerisate wenigstens 60 Gew.-% Kautschuk enthalten.

Den vorgeschlagenen Maßnahmen haftet jedoch der Nachteil an, daß die Zähigkeitsverbesserung mit einer wesentlichen Verschlechterung anderer Eigenschaften, wie z.B. Modul, Härte, Steifigkeit und Wärmeformbeständigkeit einhergeht.

Es wurde nun überraschenderweise gefunden, daß man auf Basis von Homopolyestern ternäre Blends mit guter Zähigkeit und verbessertem Modul herstellen kann, wenn man in bestimmten Mischungsverhältnissen den Homopolyester mit einem SAN-Harz und einem speziellen Pfropfpolymerisat mit mittleren Kautschukgehalten kombiniert und dabei bestimmte Strukturparameter der Komponenten berücksichtigt.

Gegenstand der Erfindung sind thermoplastische Formmassen aus:

a) 30 bis 80 Gew.-Teilen eines thermoplastischen Polyalkylenterephthalates auf Basis aromatischer Dicarbonsäuren oder ihrer reaktionsfähigen Derivate und aliphatischen, cycloaliphatischen oder araliphatischen Diolen,

b) 10 bis 50 Gew.-Teilen eines in Masse hergestellten Styrol-Acrylnitril-Copolymerharzes mit Acrylnitrilgehalten von 15 bis 30 Gew.-%, bezogen auf 100 Gew.-Teile (b), und L-Werten von 40 bis 100

$$\left(\text{L-Wert} = \frac{\eta \text{ spez}}{C} \text{ bei } C = 5 \text{ g/l in Methylethylketon}\right.$$

$$\left.\text{bei } T = 25^0 C\right) \text{ und}$$

c) 20 bis 50 Gew.-Teilen eines Emulsionspfropfpolymerisates aus Vinylmonomeren auf einem Kautschuk, wobei das Pfropfpolymerisat Kautschukgehalte von 30 bis 59 Gew.-% bezogen auf 100 Gew.-Teile (c) enthält,

wobei sich die Gew.-Teile a) bis c) zu 100 ergänzen sollen.

Bevorzugte erfindungsgemäße Formmassen bestehen aus:

a) 35 bis 70 Gew.-Teilen Polyalkylenterephthalat und

b) 15 bis 45 Gew.-Teilen eines in Masse hergestellten SAN-Harzes mit Acrylnitrilgehalten von 15 bis 30 Gew.-%, insbesondere 20 bis 25 Gew.-% und L-Werten von 40 bis 100, vorzugsweise von 50 bis 90 und

c) 15 bis 40 Gew.-Teilen eines Emulsionspfropfpolymerisates aus Vinylmonomeren auf einem Kautschuk, wobei das Pfropfpolymerisat Kautschukgehalte von 30 bis 59 Gew.-%, insbesondere 40 bis 55 Gew.-% bezogen auf 100 Gew.-Teile von c) enthält,

wobei sich die Gew.-Teile a) bis c) zu 100 ergänzen sollen.

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Carl-Hanser-Verlag, München 1973).

Bevorzugte Polyalkylenterephthalate enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 4 bis 12 C-Atomen enthalten, wie z.B. Reste von Phthalsäure, Isophthalsäure, Naphthalin-2,6-dicarbonsäure, 4,4-Diphenylcarbonsäure, Bernstein-, Adipin-, Sebacinsäure, Azelainsäure und Cyclohexandiessigsäure.

Die bevorzugten Polyalkylenterephthalate können neben Ethylenglykol- bzw. Butandiol-1,4-resten bis zu 20 Mol-%, vorzugsweise bis zu 10 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylenpropandiol-1,3, Neopentylglykol, Pentandiol-1,5, Hexandiol-1,6, Cyclohexandimethanol-1,4, 3-Ethylenpentandiol-2,4, 2-Methylpentandiol-2,4, 2,2,4-Trimethylpentandiol-1,3, Hexandiol-2,5, 1,4-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-$\beta$-hydroxyethoxyphenyl)-propan und 2,2-Bis-(4-hydroxypropoxyphenyl)-propan, 2,2-Bis-(4-$\beta$-hydroxyethoxyphenyl)-3,3,5-trimethylcyclohexan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure bzw. deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen enthalten 1 bis 50, vorzugsweise 1 bis 30 Gew.-% Polyethylenterephthalat und 50 bis 99, vorzugsweise 70 bis 99 Gew.-% Polybutylenterephthalat.

Ganz besonders bevorzugt sind Polyalkylenterephthalate, die allein aus Terephthalsäure und deren reaktionsfähigen Derivaten (z.B. deren Dialkylestern) und Butandiol-1,4 hergestellt worden sind.

Die als Komponente a) vorzugsweise verwendeten Polyalkylenterephthalate besitzen im allgemeinen eine Intrinsic-Viskosität von 0,4 bis 1,5 dl/g, vorzugsweise 0,6 bis 1,3 dl/g, insbesondere 0,85 bis 1,0 dl/g, jeweils gemessen in Phenol/o-Dichlorbenzol (1:1 Gewichtsteile) bei 25°C im Ubbelohde-Viskosimeter.

Das Styrol-Acrylnitril-Copolymerharz b), ein sogenanntes SAN-Harz, stellt ein durch Massepolymerisation erzeugtes Copolymerharz dar. Unter dem Begriff Massepolymerisate (in Masse erzeugtes SAN-Harz) im Sinne der Erfindung werden Polymerisate verstanden, die in Abwesenheit oder Anwesenheit von Hilfslösungsmitteln, wie z.B. Ethylbenzol, Toluol, Aceton und Methylethylketon, durch radikalische Polymerisationsinitiierung erzeugt wurden.

Diese Herstellung von sogenannten Masse-SAN ist allgemein bekannt.

Solche Harze können zwar auch über andere Polymerisationsverfahren erzeugt werden, wie z.B. Emulsionspolymerisation oder Suspensionspolymerisation. Diese besitzen aber im Vergleich zum Harz b) im Sinne der Erfindung größere chemische und molekulare Uneinheitlichkeiten und bewirken nachteilige Eigenfarben und auch schlechtere Fließfähigkeiten sowie höhere Verunreinigungsgrade bei thermoplastischer Verarbeitung.

Die SAN-Harze im Sinne der Erfindung sind bekannte, technologisch gebräuchliche Copolymerharze, die über diskontinuierliche oder kontinuierliche sogenannte Masseverfahren, gegebenenfalls unter Mitverwendung von Radikalinitiatoren oder Hilfslösungsmittel erzeugt werden. Die Harze b) können gegebenenfalls bis zu 30 Gew.-% anderer Vinylmonomerer einpolymerisiert enthalten, wie beispielsweise $\alpha$-Methylstyrol, $C_1$-$C_8$-Alkylacrylate, $C_1$-$C_8$-Alkylmethacrylate und Vinylacetat. Bevorzugt bestehen die Harze b) jedoch nur aus Styrol und Acrylnitril.

Die Emulsionspfropfpolymerisate c) sind gleichfalls bekannte Polymerisate und werden hergestellt durch radikalische Emulsionspfropfpolymerisation von Vinylmonomeren auf partiell vernetzte teilchenförmige Kautschuke. Als Kautschuke fungieren dabei bekannte Polymere wie Polybutadien, Butadiencopolymerisate mit Styrol oder Acrylnitril, Polyisopren, Acrylatkautschuke oder Silikonkautschuke; diese Kautschuke als Basis für Pfropfpolymerisate sind allgemein bekannt. Gleichfalls geeignet sind auch bekannte Kautschukgrundlagen mit sogenannter Kern-Mantel-Struktur. Als Vinylmonomere zur Pfropfung der Kautschuke fungieren Mischungen aus Monomeren wie beispielsweise Styrol, Acrylnitril, Methylmethacrylat und Alkylacrylat, insbesondere aber Styrol-Acrylnitril-Gemische mit Acrylnitrilgehalten von 20 bis 30 Gew.-%. Der Kautschukgehalt der Pfropfpolymerisate c) beträgt 30 bis 59 Gew.-%, insbesondere 40 bis 55 Gew.-%. Besonders bevorzugte Pfropfkautschuke im Sinne der Erfindung sind SAN-Pfropfpolymerisate auf Polybutadien, Alkylacrylatkautschuk-oder Silikonkautschuk-Grundlagen.

Der L-Wert ist definiert durch

$$\frac{\eta_{spez.}}{C} \quad \text{bei } C = 5 \text{ g/l in Methylethylketon bei } 25^\circ C$$

Die erfindungsgemäßen Mischungen können neben Stabilisatoren und phenolischen Antioxidantien übliche Zusätze, wie z.B. Entformungshilfsmittel, Mittel zur Verbesserung der Oberflächengleiteigenschaften, Fließhilfsmittel, Kristallisationshilfsmittel, Antistatika, UV-Stabilisatoren, Stabilisatoren gegen hydrolytischen Abbau, anorganische und/oder organische Farbpigmente bzw. Farbstoffe und Flammschutzmittel enthalten.

Die Herstellung der erfindungsgemäßen Formmassen kann in den üblichen Mischaggregaten wie Walzen, Knetern, Ein- und Mehrwellenextruder erfolgen. Besonders geeignet sind Doppelwellenextruder.

Die Mischungen können auf den genannten Mischaggregaten hergestellt werden, indem die Komponenten a), b) und c) gemeinsam aufgeschmolzen und homogenisiert werden, oder indem die Polymerisate b) und c) in die Schmelze des Polyalkylenterephthalates a) eingearbeitet werden.

Die Temperatur bei der Herstellung der Mischungen sollte mindestens 10°C oberhalb des Schmelzpunktes des Polyalkylenterephthalates a) und unterhalb 300°C, vorzugsweise zwischen 245 und 280°C liegen.

Beispiele

Eingesetzte Komponenten b)

b$_1$   Ein Masse-SAN-Harz mit einem Acrylnitrilgehalt von 24 Gew.-% und einem L-Wert, wie oben definiert von 78.

Eingesetzte Komponenten c)

c$_1$   Ein ABS-Pfropfpolymer aus 25 Gew.-% SAN-Harz mit einem Acrylnitrilgehalt von 28 Gew.-% und 75 Gew.-% vernetztem Polybutadien eines mittleren Teilchendurchmessers von 0,4 $\mu$m, hergestellt in Emulsion.

c$_2$   Ein ABS-Pfropfpolymer aus 45 Gew.-% SAN-Harz mit einem Acrylnitrilgehalt von 28 Gew.-% und 55 Gew.-% vernetztem Polybutadien eines mittleren Teilchendurchmessers von 0,4 $\mu$m, hergestellt in Emulsion.

Das aufgepfropfte SAN-Polymerisat wurde hergestellt durch radikalische Emulsionspfropfpolymerisation von Styrol/Acrylnitril-Mischungen im Gewichtsverhältnis von 72:28 (Styrol:Acrylnitril).

Beispiele 1 bis 4

Auf einer kontinuierlich arbeitenden Zweiwellenmaschine der Firma Werner & Pfleiderer (Typ ZSK 32) wurde Polybutylenterephthalat mit einer Intrinsic-Viskosität von 0,92 dl/g aufgeschmolzen. Durch einen zweiten Einfüllstutzen wurden die ABS- und die SAN-Polymerisate eindosiert. Stickstoffbeschleierung ist zweckmäßig. Die Polymerisate wurden aufgeschmolzen und im Polybutylenterephthalat homogen verteilt. Es kann vorteilhaft sein, die Schmelze vor dem Austritt aus der Düse zu entgasen. Die Zylindertemperaturen wurden so eingestellt, daß eine Massetemperatur von 255°C gewährleistet war. Der Schmelzestrang der Mischung aus Polybutylenterephthalat und den ABS- und SAN-Polymerisaten wurde in Wasser abgekühlt, granuliert und getrocknet.

Vom Granulat wurden auf einer üblichen Spritzgußmaschine bei 260°C Kleinstäbe 80 x 10 x 4 mm verspritzt.

Es hat sich überraschend gezeigt, daß bei den erfindungsgemäßen Formmassen der Elastizitätsmodul und damit die Steifigkeit dieser Formmassen erhöht werden kann, ohne daß die Schlagzähigkeit dieser Formmassen ungünstig beeinflußt wird. Es werden somit zwei Eigenschaften kombiniert, die normalerweise gegenläufig sind (vgl. Tabelle 1).

Tabelle 1

| Beispiel | Anteil PBT (Anteil in PBT-Mischung) % | Pfropfpolymerisat ABS (Anteil in PBT-Mischung) % | (Anteil Polybutadien im Pfropfpolymerisat) % | Polymerisat SAN (Anteil in PBT-Mischung) % | Schlag-zähig-keit ISO 180/1C kJ/m² | Biege-E-Modul DIN 53457-B3 N/m² | Vicat B DIN 53460 °C |
|---|---|---|---|---|---|---|---|
| 1 (Vergleich) | 77 | 23 | 75 | - | n.g. | 1500 | 114 |
| 2 (Vergleich) | 68 | 32 | 55 | - | n.g. | 1640 | 110 |
| 3 (Vergleich) | 52 | 23 | 75 | 25 | 55 | 1830 | 104 |
| 4 (erfindungsgemäß) | 43 | 32 | 55 | 25 | n.g. | 1850 | 107 |

n.g. = nicht gebrochen

Das eingesetzte PBT hat eine Intrinsic-Viskosität von 0,92 dl/g

**Patentansprüche**

1. Thermoplastische Formmassen aus:
   a) 30 bis 80 Gew.-Teilen eines thermoplastischen Polyalkylenterephthalates auf Basis aromatischer Dicarbonsäuren oder ihrer reaktionsfähigen Derivate und aliphatischen, cycloaliphatischen oder araliphatischen Diolen,

b) 10 bis 50 Gew.-Teilen eines in Masse hergestellten Styrol-Acrylnitril-Copolymerharzes mit Acrylnitrilgehalten von 15 bis 30 Gew.-%, bezogen auf 100 Gew.-Teile (b), und L-Werten von 40 bis 100, wobei der L-Wert definiert ist als

$$\frac{\eta \ spez}{C}$$ , gemessen bei einer Konzentration

$C = 5 \ g/l$ in Methylethylketon bei $25^0 C$, und

c) 20 bis 50 Gew.-Teilen eines Emulsionspfropfpolymerisates aus Vinylmonomeren auf einem Kautschuk, wobei das Pfropfpolymerisat Kautschukgehalte von 30 bis 59 Gew.-% bezogen auf 100 Gew.-Teile (c) enthält,

wobei sich die Gew.-Teile a) bis c) zu 100 ergänzen sollen.

2. Thermoplastische Formmassen gemäß Anspruch 1, wobei das Pfropfpolymerisat Kautschukgehalte von 40 bis 55 Gew.-% bezogen auf 100 Gew.-Teile von c) enthält.

3. Thermoplastische Formmassen gemäß Anspruch 1, wobei die L-Werte zwischen 50 und 90 liegen.